Europäisches Patentamt

European Patent Office

Office européen des brevets

(11) Numéro de publication: **0 377 348**
**A1**

## (12) DEMANDE DE BREVET EUROPEEN

(21) Numéro de dépôt: **89402543.6**

(22) Date de dépôt: **15.09.89**

(51) Int. Cl.⁵: **B62D 1/18**

(30) Priorité: **21.09.88 FR 8812333**

(43) Date de publication de la demande:
**11.07.90 Bulletin 90/28**

(84) Etats contractants désignés:
**BE DE ES GB IT NL SE**

(71) Demandeur: **ECIA - EQUIPEMENTS ET COMPOSANTS POUR L'INDUSTRIE AUTOMOBILE**

**F-25400 Audincourt (Doubs)(FR)**

(72) Inventeur: **Hoblingre, André**
**28, rue Vincent d'Indy**
**F-25700 Valentigney(FR)**

(74) Mandataire: **de Morgues, Marie Emma et al**
**Cabinet Lavoix 2, place d'Estienne d'Orves**
**F-75441 Paris Cédex 09(FR)**

(54) **Dispositif de serrage et dispositif de fixation d'une colonne de direction réglable utilisant un tel dispositif.**

(57) Le dispositif de serrage comporte deux leviers (16,18) articulés entre eux et chacun sur l'une des ailes (12,14) d'un collier (10) à serrer. L'un de ces leviers (18) comporte une fente ouverte (36), transversale au plan des articulations, dans laquelle est monté un système vis-écrou (40,42) de réglage de l'écartement des bords de la fente et de la tension du levier.

Le collier (10) est solidaire d'une colonne de direction réglable en hauteur et ses ailes (12,14) sont placées en regard de chacun des bords internes opposés (52,54) de la fenêtre d'une ferrure fixe traversée par cette colonne. Le dispositif de serrage bloque la colonne dans la position choisie.

FIG.2

## Dispositif de serrage et dispositif de fixation d'une colonne de direction réglable utilisant un tel dispositif

La présente invention concerne un dispositif de serrage du type dit "trois points" ou à genouillère, comportant deux leviers articulés entre eux et chacun sur un point d'appui extérieur, de sorte qu'ils tendent à écarter ces deux points d'appui, dont l'un au moins est constitué par l'organe à serrer, et qu'ils ont une position de serrage maximum lorsque les trois articulations sont dans un même plan.

Les leviers peuvent recevoir des formes diverses mais ils doivent toujours être associés à un dispositif de réglage de la force qu'ils exercent afin de permettre à ce serrage d'être constant et précis. Ce réglage est par exemple assuré, comme décrit dans les FR-B 2 579 159 et 2 588 047, au moyen d'un tirant muni de deux butées, l'une fixe l'autre réglable, dont l'une constitue l'un des points d'appui extérieur des leviers tandis que l'autre est en contact avec l'organe à serrer. Le serrage est alors déterminé par la tension du tirant entre les butées et est toujours identique dans la position des leviers correspondant au serrage.

Le dispositif ainsi réalisé est sûr et efficace, mais il oblige à prévoir un passage pour le tirant dans les leviers et même dans l'organe à serrer pour que les butées fixe et réglable puissent être placées de part et d'autre de l'ensemble, ce qui rend la réalisation complexe et souvent encombrante.

La présente invention a pour but de remédier à cet inconvénient en fournissant un dispositif de serrage du type ci-dessus qui puisse facilement être réglé avec précision mais ne comporte pas de tirant ou autre organe traversant les leviers.

Cette invention a en effet pour objet un dispositif de serrage comportant deux leviers articulés entre eux et chacun sur un point d'appui extérieur et des moyens de réglage de la force exercée sur ces appuis, dans lequel l'un des leviers comporte une fente ouverte qui est transversale au plan des articulations et dans laquelle sont montés des moyens de réglage de l'écartement des bords de la fente.

Selon un mode de réalisation préféré, le dispositif comporte un levier recourbé en U qui délimite la fente et est muni extérieurement à l'extrémité libre de chacune de ces branches d'une saillie portant un élément d'articulation.

De préférence, les moyens de réglage de l'écartement des bords de la fente comportent un écrou à parois latérales inclinées qui est emboîté sur une profondeur variable entre les deux parois de la fente du levier, à proximité de l'extrémité ouverte de cette dernière.

La force de serrage exercée par le dispositif dépend ainsi de l'écartement des bords de la fente du levier, ce qui supprime la nécessité d'organe supplémentaire.

Un tel dispositif de serrage est tout particulièrement adapté à la fixation d'une colonne de direction réglable que ce soit en hauteur ou axialement.

L'invention s'étend donc également à un dispositif de fixation d'une telle colonne de direction comportant un collier solidaire de la colonne et muni de deux ailes parallèles et une ferrure fixe, dans lequel le dispositif de serrage est monté au moins partiellement entre les ailes du collier et assure ainsi le serrage de l'une au moins de ces ailes sur la ferrure fixe.

Selon un mode de réalisation, le collier est formé par une plaque qui est percée d'un orifice de passage de la colonne et dont les ailes sont parallèles à cette colonne, et le dispositif de serrage est articulé sur les faces internes de ces deux ailes et tend à les repousser contre la ferrure.

Selon un autre mode de réalisation, le collier a une forme en U et comporte deux ailes parallèles percées chacune d'un orifice de passage de la colonne, et le dispositif de serrage est disposé contre le fond du U, au moins partiellement entre les deux ailes, et applique l'une de ces ailes contre la face de la ferrure.

La description ci-dessous de modes de réalisation, donnés à titre d'exemple non limitatif et représentés aux dessins annexés, fera d'ailleurs ressortir les avantages et caratéristiques de l'invention. Sur ces dessins :

La figure 1 est une vue en élévation d'un dispositif de fixation d'une colonne de direction comportant un dispositif de serrage suivant l'invention.

La figure 2 est une vue en coupe suivant la ligne 2-2 de la Fig.1.

La figure 3 est une vue en coupe suivant la ligne 3-3 de la Fig.2.

La figure 4 est une vue en plan d'une variante de réalisation des moyens de réglage du dispositif de serrage.

La figure 5 est une vue en perspective éclatée du dispositif de fixation de la Fig.1.

La figure 6 représente une variante de réalisation du dispositif de fixation d'une colonne de direction partie en vue de dessus, partie en coupe horizontale.

La figure 7 est une vue en coupe longitudinale du dispositif de fixation de la Fig.6 en position d'utilisation.

La figure 8 est une vue en perspective éclatée montrant la noix et la cale du dispositif de serrage des Fig.6 et 7.

La figure 9 est une section transversale de la colonne de direction télescopique de la Fig.7 au droit de la noix de serrage.

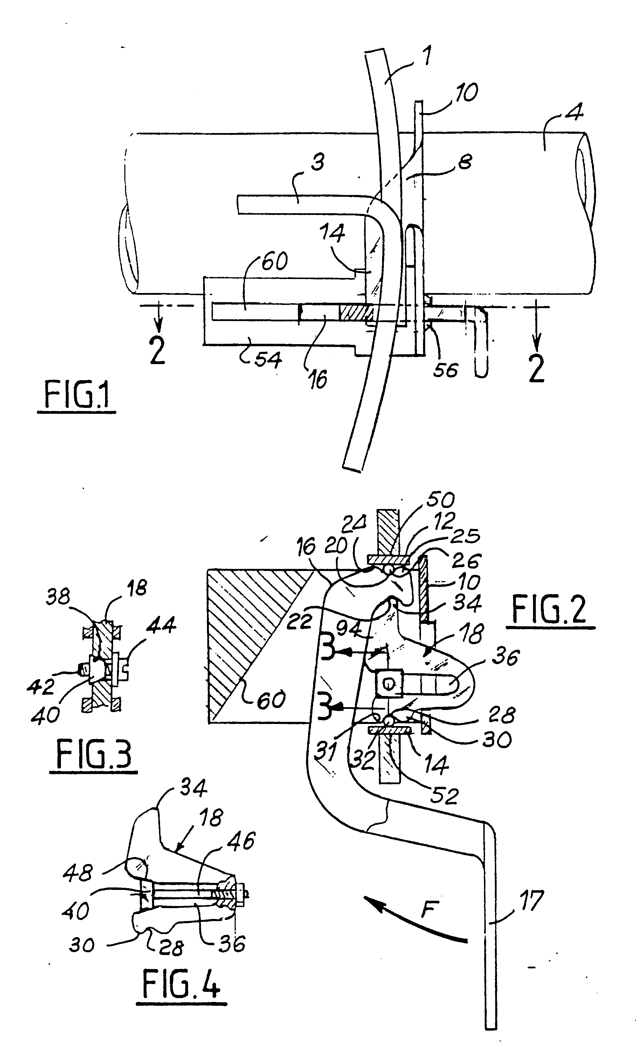

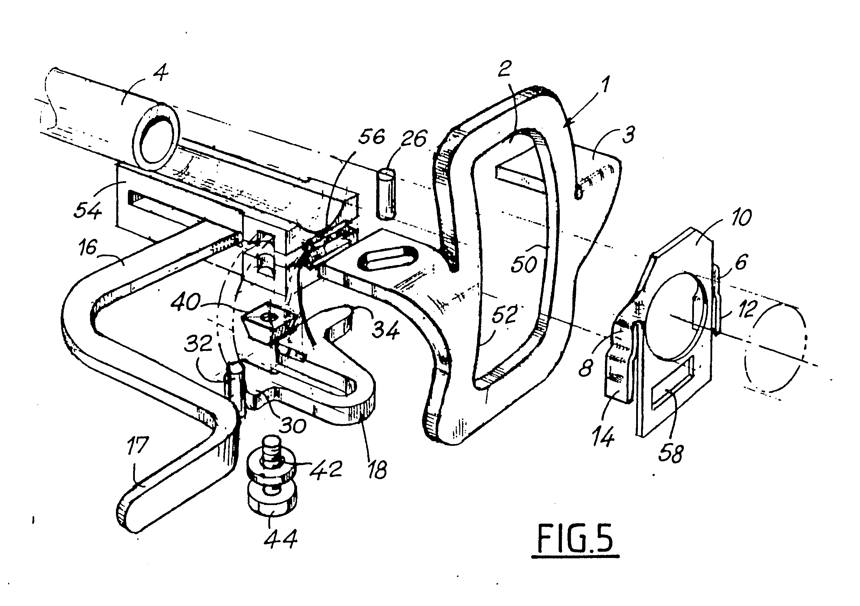

Le dispositif de fixation représenté sur les Fig.1 à 5 est tout particulièrement destiné au montage d'une colonne de direction de véhicule automobile qui est réglable en hauteur par pivotement autour d'un axe horizontal situé au niveau de l'articulation de la partie supérieure de l'arbre de direction. Cette fixation comporte en effet une ferrure fixe 1 qui est percée d'une fenêtre 2 susceptible d'être traversée par la colonne de direction 4 en permettant à celle-ci de se déplacer vers le haut ou vers le bas et munie de pattes rabattues 3 de fixation sur la carrosserie. Dans cette fenêtre pénètrent les deux ailes latérales 6 et 8 d'un collier 10 fixé sur le tube extérieur de la colonne 4, chacune de ces ailes étant prolongée à sa partie inférieure par une patte élastique 12, 14 respectivement, qui peut entrer en contact avec l'un des bords internes opposés de la fenêtre 2 et est légèrement espacée du collier 10 (Fig.5).

Entre les ailes 6 et 8, ou plus exactement entre les pattes 12 et 14 du collier 10, est monté un dispositif de serrage du type dit "trois points" ou à genouillère. Ce dispositif comporte deux leviers 16 et 18 qui sont susceptibles de pivoter l'un sur l'autre et sont en outre articulés chacun sur l'une des ailes latérales 6 et 8. Le levier 16 est un levier de commande et comporte deux encoches opposées 20, 22 dont l'une est bordée par deux bossages 24, 25 et reçoit une aiguille 26 en contact le long d'une de ses génératrices avec la patte élastique 12 du collier 10 (Fig 2). Il est par ailleurs prolongé par une poignée de manoeuvre 17.

Le second levier 18, ou levier intermédiaire, comporte à l'une de ses extrémités une encoche 28 délimitée par deux bossages 30, 31 et destinée à loger une aiguille 32 qui est en contact avec la patte élastique 14 du collier 10. Son autre extrémité forme un bossage arrondi 34 qui coopère avec l'encoche 22 du levier 16 pour former l'articulation centrale du dispositif de serrage.

Entre ses deux extrémités, le levier 18 est recourbé en U et délimite ainsi une fente 36 ouverte en direction du levier 16 et sensiblement perpendiculaire au plan passant par les deux aiguilles 26 et 32. A proximité de l'extrémité ouverte de la fente, les parois latérales de celles-ci forment deux faces opposées, inclinées de façon à s'évaser vers l'extérieur, 38, sur lesquelles vient reposer un écrou pente 40 (Fig.3) qui a une surface extérieure en forme de tronc de pyramide et est porté par une vis 42 traversant l'épaisseur du levier 18 et ayant une tête 44 en appui sur ce levier de part et d'autre de la fente 36. L'importance de la pénétration de l'écrou 40 dans la fente 36 détermine l'écartement des bords de cette fente et par suite la distance entre les deux extrémités du levier 18, c'est-à-dire entre l'aiguille 32 30 et l'articulation 34, ainsi que la tension du levier 18. La valeur du serrage maximale susceptible d'être exercée par le dispositif de serrage lorsque l'articulation 34 est dans le même plan que les aiguilles 26 et 32 dépend donc de la position de l'écrou 40. Elle peut donc être réglée de manière extrêmement précise par une simple action sur la vis 42 et reste inchangée pendant toute la durée d'utilisation du dispositif. En outre ce réglage absorbe les tolérances de fabrication.

Selon une variante de réalisation représentée sur la Fig.4, la fente 36 comporte à son extrémité ouverte des parois inclinées 48 s'évasant en direction de l'extérieur, c'est-à-dire du levier 16, et l'écrou 40 est vissé sur une vis 46 située dans l'axe de la fente 36 et traversant le levier 18 pour être accessible à l'extérieur de ce dernier afin de permettre le réglage. Celui-ci s'effectue de la même manière qu'avec le dispositif représenté sur les Fig.2 et 3 par une modification de la position de l'écrou 40 sur la vis qui le porte, et de l'écartement entre les deux bords de la fente et entre les deux extrémités 28 et 34 du levier 18.

De préférence, entre sa fente 36 et son bossage d'extrémité 34, le levier 18 a un contour coudé dont la forme est complémentaire de celle de la paroi du levier 16 adjacente à l'encoche 22, de sorte que les deux leviers peuvent s'emboîter l'un dans l'autre dans la position de serrage maximum représentée sur la Fig.2. Dans cette position, les pattes 12 et 14 du collier 10 sont étroitement appliquées contre les parois internes opposées 50 et 52 de la fenêtre 2. Un basculement du levier 16 dans le sens de la flèche F, c'est-à-dire vers la gauche en considérant la Fig.2, fait pivoter ce dernier autour de l'aiguille 26 en entraînant l'articulation 22, 34 et en faisant par suite pivoter le levier 18 autour de l'aiguille 32. Les trois points d'articulation n'étant plus alignés, l'effort exercé sur les aiguilles 26 et 32 et par suite sur les pattes élastiques 12 et 14 est réduit jusqu'à une valeur qui permet le glissement de ces pattes entre les bords 50 et 52 de la fenêtre 2, ou même supprimé le contact entre les pattes et la fenêtre. Un simple déplacement du levier 16 en sens inverse repousse l'articulation centrale 22, 34 jusque dans le plan des aiguilles 26, 32 c'est-à-dire dans le plan de serrage maximum, puis un peu au-delà de ce plan jusqu'à la position de serrage effectif désirée. Le bossage extrême 25 du levier 16 vient alors en contact avec la patte élastique 12 du collier 10 et joue le rôle de butée de limitation du déplacement du levier 16.

Le serrage et le déblocage du collier 16 par rapport à la ferrure 1 s'effectuent ainsi de manière extrêmement simple et sûre.

Dans le dispositif de fixation représenté sur les Fig.1, 2 et 5, le dispositif de serrage constitué par les leviers 16 et 18 est monté dans un boîtier plat 54 qui est fixé par des griffes 56, en saillie sur sa face extrême, dans une lumière 58 du collier 10. Le boîtier 54 traverse ainsi la fenêtre 2 de la ferrure 1 et s'étend parallèlement au tube 4 de la colonne de direction, en-dessous de ce tube, comme le montrent plus particulièrement les Fig.1 et 5. Le boîtier est fermé à son extrémité opposée aux griffes 56 et au collier 10 mais est fendu sur ses trois autres côtés, de façon à permettre le libre déplacement des leviers 16 et 18. De préférence, toutefois, il comporte une paroi interne 60, oblique par rapport au collier 10, contre laquelle vient buter le levier 16 lors du déverrouillage.

En outre, le levier 16 est de préférence coudé de façon à placer la poignée 17 formant son extrémité à portée de la main du conducteur du véhicule.

Ce dernier pourra donc facilement régler la position en hauteur de la colonne de direction 4 en déplaçant cette colonne dans la fenêtre 2 après avoir libéré les pattes 12 et 14 par simple pivotement des leviers 16 et 18. Inversement, la colonne 4 sera immobilisée à la hauteur désirée par le retour de ces leviers 16 et 18 à la position de serrage choisie.

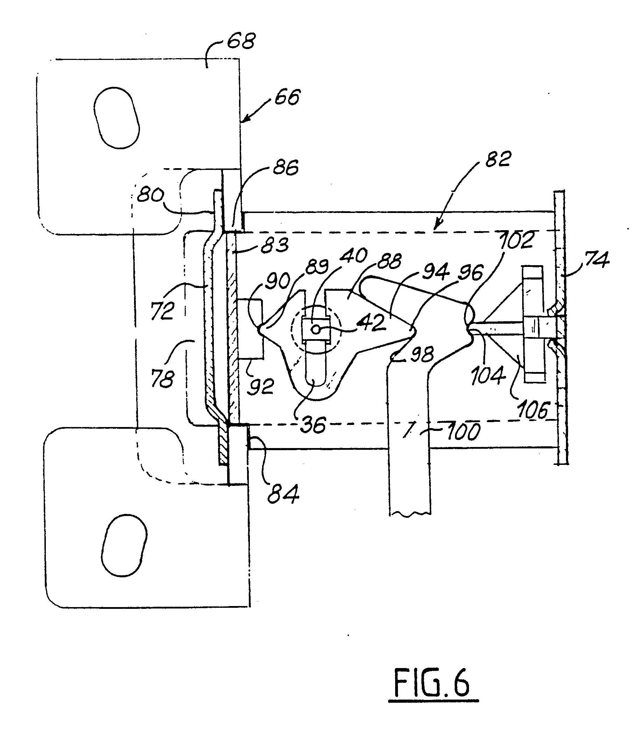

Selon une variante de réalisation représentée sur les Fig.6 à 9, le dispositif de fixation d'une colonne de direction, ou analogue 64 comporte une ferrure fixe 66 qui n'est pas fermée à sa partie supérieure et a ainsi sensiblement la forme d'un U dont les branches sont recourbées à leur partie supérieure pour constituer des pattes de fixation 68. Sur la colonne 64 est monté un collier 70 qui comporte deux ailes parallèles, respectivement 72 et 74, percées chacune d'un orifice de passage de la colonne de direction. Ces ailes sont réunies entre elles par une paroi 76 de plus faible largeur qui traverse la fenêtre 78 délimitée par la ferrure 66 de sorte que l'aile 72 se trouve à proximité d'une face verticale de la ferrure 66, tandis que l'aile 74 est située du côté opposé de la ferrure 66 à une certaine distance de cette ferrure. L'aile 72 comporte à sa partie inférieure de part et d'autre du fond 76, deux pattes élastiques 80 de contact avec la ferrure 66.

Le dispositif de serrage est porté par le fond 76 du collier et s'étend entre les deux ailes 72 et 74 de ce dernier. Il est placé à l'intérieur d'un boîtier plat 82 fendu sur trois de ses côtés. Le quatrième côté 83 est découpé en 84 à chacune de ses extrémités de façon à pénétrer dans la fenêtre 78 et à s'emboîter sur les deux bords opposés 86 de cette fenêtre. A son extrémité opposée le boîtier 82 est fixé sur l'aile 74 par tout moyens appropriés et notamment au moyen d'ergots prolongeant sa paroi supérieure et sa paroi inférieure et pénétrant dans des crevées de l'aile 74.

A l'intérieur du boîtier 82 est monté un levier intermédiaire 88 comportant une fente transversale 36 dans laquelle est monté un système vis-écrou 40, 42 de réglage de tension. D'un côté de cette fente le levier 88 comporte un bras court terminé par une surface convexe semi-cylindrique 89 qui est montée pivotante dans un évidement de forme complémentaire 90 d'une butée 92 solidaire de la paroi extrême 83 du boîtier. De l'autre côté de la fente 36 le levier 88 comporte un bras relativement allongé 94 qui est également terminé par une surface convexe semi-cylindrique 96 qui coopère avec une encoche 98 de la tête d'un levier de commande 100. Cette tête comporte également une encoche 102, tournée en sens inverse de l'encoche 98, dans laquelle peut pivoter l'extrémité arrondie 104 d'une noix de serrage 106 reliée à la paroi 74 par une cale 108.

Lorsque les centres des surfaces 102, 96 et 89 sont alignées, le dispositif de serrage, c'est-à-dire les leviers 100 et 88, exercent un effort de serrage maximum entre la cale 92 et la noix de serrage 104 de sorte que cet effort est transmis à l'aile 74 du collier 70 et tend à repousser cette aile loin de la ferrure 66, ce qui tire l'aile 72 et applique étroitement les pattes élastiques 80 de cette aile contre la ferrure de part et d'autre de la fenêtre 78. Le collier 70 et la ferrure 66 sont ainsi rendus rigoureusement solidaires, ce qui immobilise la colonne 74 et fixe par exemple sa position en hauteur.

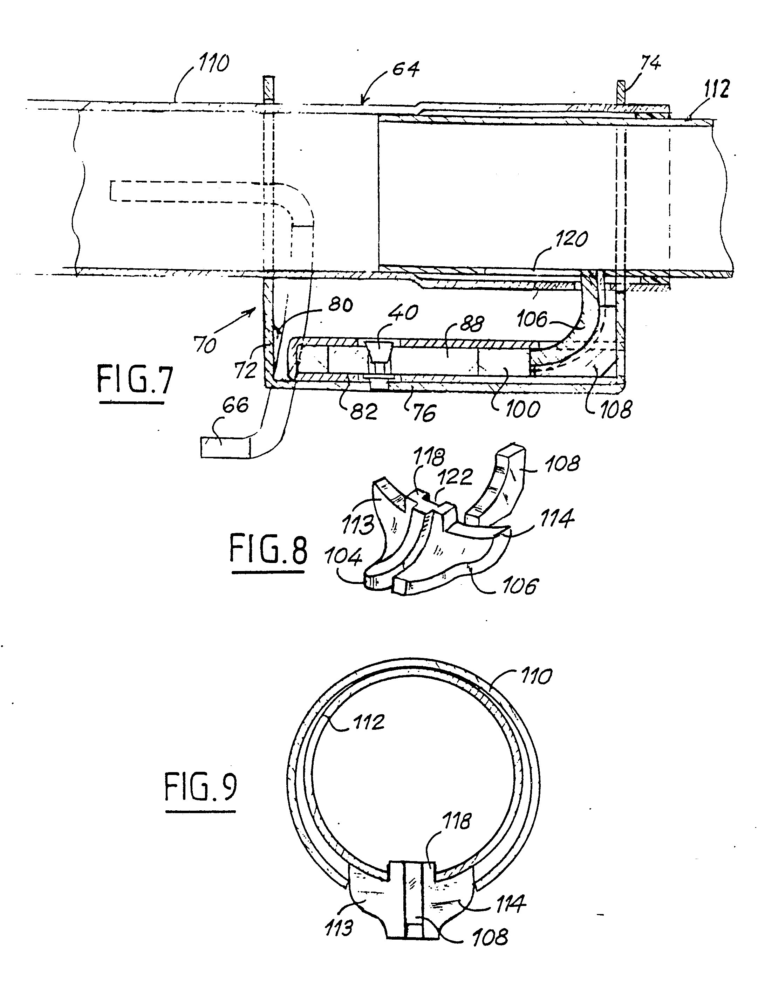

Dans le mode de réalisation représenté sur la Fig.7, cette colonne 64 est formée par deux tubes 110 et 112 emboîtés l'un dans l'autre et susceptibles de se déplacer axialement l'un par rapport à l'autre. La noix de serrage 106 représentée sur la Fig.8, comporte alors de préférence deux ailes latérales, respectivement 113 et 114, qui sont incurvées à leur partie supérieure avec un diamètre correspondant au diamètre extérieur du tube interne 112 et une saillie centrale 118 s'élevant au dessus de ces ailes de façon à bloquer axialement les tubes 110 et 112. Le tube extérieur 110 comporte en effet une lumière circonférentielle 116 permettant le passage des ailes et leur serrage contre le tube 112 tandis que ce dernier est percé d'une fente axiale 120 dans laquelle pénètre la saillie 118 qui assure ainsi le centrage constant des deux tubes. En outre, l'ensemble de la noix de serrage est incurvé dans le plan vertical et comporte une rainure 122 sensiblement en arc de cercle de centrage d'une cale 108 ayant une face de contact de forme complémentaire. Grâce à cette disposition, la cale 108 est interposée à la fois entre la noix de serrage et l'aile 74 et entre cette même noix et le fond 76 du boitier 82. Par suite, lorsque les leviers 100 et 88 sont en position de serrage, ils repoussent la noix de serrage 106 à la fois en direction de l'aile 74 et en direction du tube extérieur 110 de la colonne 64. Les ailes 113 et 114 de cette noix sont ainsi serrées contre le tube interne 112 qu'elles immobilisent axialement.

Par contre, si l'on veut modifier les positions relatives des tubes 110 et 112, il suffit de faire pivoter le levier de commande 100 pour libérer la noix de serrage et permettre un déplacement relatif des deux tubes.

Bien entendu, le fond 76 du collier 70 peut avoir une longueur inférieure à celle du boîtier 82. Une lumière est alors ménagée à la partie inférieure de l'aile 72 de façon à permettre à ce boîtier de la traverser et de faire saillie à l'extérieur du collier. De même les articulations peuvent être réalisées au moyen d'aiguilles chaque fois que cela est désirable.

Dans tous les cas le serrage est obtenu avec un dispositif peu encombrant qui assure un effort de serrage précis et constant par le réglage des leviers eux-mêmes. Le boîtier plat 54, 82 qui guide les leviers et les maintient peut également constituer une réserve de graisse.

**Revendications**

1. Dispositif de serrage comportant deux leviers (16,18,88,100) articulés entre eux et chacun sur un appui extérieur et des moyens de réglage de la force exercée entre ces appuis extérieurs, caractérisé en ce que l'un des leviers (18,88) comporte une fente (36), ouverte, qui est transversale au plan des articulations et dans laquelle sont montés des moyens (40,42,46) de réglage de l'écartement des bords de la fente (36) et des points d'articulation du levier (88,18).

2. Dispositif de serrage suivant la revendication 1, caractérisé en ce que le levier fendu (18,88) est recourbé en U dans sa partie centrale et muni extérieurement à l'extrémité libre de chacune de ses branches d'une saillie portant un élément d'articulation (28,34).

3. Dispositif de serrage suivant la revendication 2, caractérisé en ce que les saillies du levier fendu (18,88) forment deux bras de longueurs inégales, le plus grand (94) étant articulé sur le second levier (16,100).

4. Dispositif de serrage suivant l'une des revendications précédentes, caractérisé en ce que les moyens de réglage de l'écartement de la fente comporte un écrou à pente (40) qui est en contact avec des faces inclinées (38,48) des parois de la fente (36), à proximité de l'extrémité ouverte de cette dernière, et une vis (42,46) de serrage de l'écrou traversant cette fente.

5. Dispositif de serrage suivant la revendication 4, caractérisé en ce que les faces inclinées (38) de la fente s'évasent en direction de l'une des faces planes du levier, la vis de serrage (42) traversant l'épaisseur de ce dernier.

6. Dispositif de serrage suivant la revendication 4, caractérisé en ce que les faces inclinées (48) de la fente (36) s'évasent en direction de l'extrémité ouverte de cette dernière, la vis de serrage (46) traversant axialement cette fente.

7. Dispositif de fixation d'une colonne de direction réglable en hauteur comportant une ferrure fixe (1,66) et un collier (10,70) solidaire de la colonne (4) et comportant deux ailes parallèles (6,8,72,74) dont l'une au moins porte des pattes élastiques (12,14,80) d'appui contre la ferrure, caractérisé en ce qu'il comporte un dispositif de serrage selon l'une des revendications précédentes qui est monté entre les ailes (6,8,72,74) du collier (10,70) et presse l'une au moins de ces ailes sur la ferrure fixe (1,66).

8. Dispositif de fixation suivant la revendication 7, caractérisé en ce que le collier est constitué par une plaque (10) percée d'un trou de passage de la colonne (4) et muni de deux ailes latérales (6,8) parallèles à cette colonne et munies de pattes élastiques (12,14), le dispositif de serrage étant articulé entre ces deux ailes.

9. Dispositif de fixation suivant l'une des revendications 7 et 8, caractérisé en ce que la ferrure fixe (1) comporte une fenêtre entre les deux bords latéraux (50,52) opposés de laquelle sont montées les deux ailes (6 et 8) du collier (10) et le dispositif de serrage qui applique ces ailes contre le bord de la fenêtre.

10. Dispositif de fixation suivant la revendication 7, caractérisé en ce que le collier comporte deux ailes latérales parallèles (72,74) percées chacune d'un orifice de passage de la colonne (64) ces ailes étant reliées entre elles par un fond (76) qui supporte le dispositif de serrage qui est monté au moins partiellement entre ces deux ailes et applique l'une d'elles (72) contre la face de la ferrure (66).

11. Dispositif de fixation suivant la revendication 10, caractérisé en ce que l'une (72) des ailes du collier (70) comporte à sa partie inférieure deux pattes élastiques (80) de contact avec la ferrure fixe (66).

12. Dispositif de fixation suivant l'une des revendications 10 et 11, caractérisé en ce que le dispositif de serrage est placé dans un boîtier (82) en butée contre la ferrure fixe (66) et agit sur l'aile (74) éloignée de cette ferrure par l'intermédiaire d'un mors de serrage (106).

13. Dispositif de fixation pour colonne de direction télescopique suivant l'une des revendications 10 à 12, caractérisé en ce qu'il comporte, entre le dispositif de serrage et l'aile (74) éloignée de la ferrure, un mors de serrage (106) incurvé vers le haut et formant à sa partie suprieure une surface incurvée (113,114) de blocage des deux tubes de la colonne.

FIG.1

FIG.2

FIG.3

FIG.4

FIG.5

EP 0 377 348 A1

88/14.

EP 0 377 348 A1

FIG.6

.19

FIG.7

FIG.8

FIG.9

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,A P | FR-A-2 579 159 (NACAM) * résumé; figures 1-3 * | 1 | B 62 D  1/18 |
| D,A | FR-A-2 588 047 (CYCLES PEUGEOT) * résumé; figure 3 * | 1 | |
| A | EP-A-0 050 999 (CYCLES PEUGEOT) * résumé; figures 4-7 * | 1 | |

DOMAINES TECHNIQUES
RECHERCHES (Int. Cl.5)

B 62 D

Le présent rapport a été établi pour toutes les revendications

| Lieu de la recherche | Date d'achèvement de la recherche | Examinateur |
|---|---|---|
| BERLIN | 14-12-1989 | KRIEGER P O |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
................................................................
& : membre de la même famille, document correspondant